# EUROPEAN PATENT APPLICATION

(11) **EP 2 590 386 A1**
(43) Date of publication of application: **08.05.2013**
(21) Application number: 11800556.0
(22) Date of filing: 30.05.2011
(51) Int. Cl.: H04M 1/00

(54) **TELEPHONE AND AUTO-REDIAL METHOD**

(30) Priority: 29.06.2010 JP 2010147468
(71) Applicant: NEC Corporation, Tokyo 108-8001 (JP)
(72) Inventor: HORI, Toshio, Tokyo 108-8001 (JP)
(74) Representative: Vossius & Partner
(86) International application number: PCT/JP2011/062347
(87) International publication number: WO 2012/002088

(57) **Abstract**

Disclosed is a telephone including: an audio database for storing a tone or a message received when a phone call is not connected; an audio recognition unit that determines whether a tone or a message received, when making a phone call, matches the tone or the message stored in the audio database; and a redialing unit that carries out redialing when it is determined by the audio recognition unit that the received tone or message matches the tone or message stored in the audio database.

## Description

### Technical Field

The present invention relates to a telephone, and more particularly to an auto-redialing method having a redialing function.

### Background Art

Conventionally, in order to secure good seats at a concert, sport watching, or at an event offering a small number of seats, we make phone calls to apply for ticket on the first date on which tickets go on sale. However, especially in the case of a popular event, a phone call is not quickly connected to an operator (including automatic response). Rather, a busy sound or a message such as "Very busy now, please call back later" is received. To apply for tickets, therefore, we must call back again. Then, we must continue doing so until the operator comes on line.

In other words, we must call back many times to secure the tickets, during which we are tied up in phone calls which wastes time. For example, if 240 phone calls are necessary to buy a ticket, assuming four phone calls a minute, one hour is wasted.

A portable telephone having an auto-redialing function is disclosed, for example, in Patent Literature 1.

The portable telephone disclosed in Patent Literature 1 is configured such that a number to be redialed or the number of redialing times is set, then when an auto-redialing button is pressed, the set number is redialed, and when a phone call is connected to the other party, a message to that effect is issued by sound or vibration. When the call is not connected to the other party, the number is redialed by the set number of times.

The use of such a redialing function facilitates the aforementioned redialing operation. Citation List

Patent Literature 1: JP2001-119469A

### Summary of Invention

### Problems to be Solved by Invention

However, the portable telephone disclosed in Patent Literature 1 has the following problems.

(1) Since a auto-redialing button is necessary to carry out redialing, hardware such as a telephone case is uniquely designed, and accordingly dependent on a telephone model, thus increasing costs/time for development.

(2) Only a preset number of redialing times is carried out. Thus, when a phone call is not connected to the other party during this period that has a preset number of redial times, the redialing operation is ended regardless of whether or not the user wants to end the redialing operation.

The present invention has been developed to solve the aforementioned problems, and it is an object of the invention to provide a telephone capable of unerringly carrying out redialing without requiring pre-configured hardware such as a telephone that includes a dedicated or like, and an auto-redialing method.

### Solution to Problem

To achieve the object, according to the present invention, a telephone having a redialing function includes: an audio database for storing a tone or a message received when a phone call is not connected; an audio recognition unit that determines whether a tone or a message received when making a phone call matches the tone or the message stored in the audio database; and a redialing unit that carries out redialing when it is determined by the audio recognition unit that the received tone or message matches that stored in the audio database.

An auto-redialing method in a telephone having a redialing function, includes: storing a tone or a message received when a phone call is not connected in an audio database; determining whether a tone or a message received when making a phone call matches the tone or the message stored in the audio database; and carrying out redialing when it is determined that the received tone or message matches that stored in the audio database.

### Effects of Invention

The present invention thus configured provides the following effects.

(1) In the present invention, a tone or a message received when a phone call is not connected is stored in an audio database without any dependence on hardware, and it is determined whether a tone or a message received when making a phone call matches the tone or the message stored in the audio database, and redialing is carried out when it is determined that the received tone or message matches that stored in the audio database. Thus, auto-redialing can be carried out only by installing such software on the telephone. As a result, a telephone manufacturing company can produce telephones that are differentiated from those of other telephone manufacturing companies, and can expect an increase in telephone sales.

(2) The redialing is carried out when it is determined that the received tone or message matches that stored in the audio database. Accordingly, the redialing is automatically carried out until a phone call is connected to the other party unless the user executes an operation. Thus, the redialing is unerringly carried out. As a result, the user can save time for redialing when applying to purchase a ticket by the telephone.

### Brief Description of Drawings

Fig. 1 A block diagram showing a telephone according to an embodiment of the present invention.
Fig. 2 An explanatory flowchart showing a redialing operation carried out for applying to purchase a ticket by using the portable telephone shown in Fig. 1.
Fig. 3 An explanatory flowchart showing the operation of canceling the redialing in the portable telephone shown in Fig. 1 in an arbitrary one of steps S2 to S7 shown in Fig. 2.

### Description of Embodiment

Hereinafter, the embodiment of the present invention will be described with reference to the drawings.

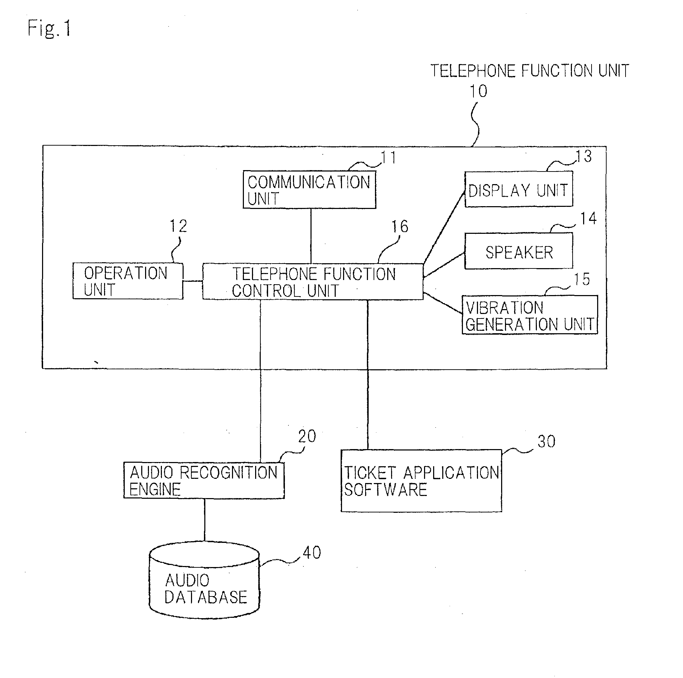

Fig. 1 is a block diagram showing a telephone according to the embodiment of the present invention.

As shown in Fig. 1, the portable telephone according to this embodiment includes telephone function unit 10, audio recognition engine 20, ticket application software 30 serving as a redialing unit, and audio database 40.

Telephone function unit 10, which includes communication unit 11, operation unit 12 such as a numerical keypad, display unit 13 such as a liquid crystal display, speaker 14, vibration generation unit 15, and telephone function control unit 16 for controlling these components, is installed in a general portable telephone.

Audio database 40 stores a voice tone such as a busy tone received as a busy sound when nonconnection of a phone call necessitates calling-back, or a message such as "Very busy now, please call back later". Such a voice tone or a message is stored beforehand by a telephone vendor at the time of shipment of the portable telephone. When the message is changed or added, a user can download the message later from the homepage of the telephone vendor.

Audio recognition engine 20 is an engine (software or hardware) for determining whether a voice tone or a message received when making a phone call matches that stored in audio database 40 in real time.

Ticket application software 30 is software for redialing, when audio recognition engine 20 determines that the received voice tone or message matches that stored in audio database 40, the same telephone number until the phone call is connected or the operation of cancelling the redialing is carried out. It is also for automatically issuing, when the phone call is connected, a message to that effect through speaker 14, driving vibration generation unit 15 to generate vibration, or flashing the backlight of display unit 13. In other words, display unit 13, speaker 14, and vibration generation unit 15 constitute an output unit according to the present invention. As the operation of cancelling the redialing, for example, the "cancel" button of operation unit 12 can be pressed. In the case of a fixed telephone, a receiver is returned.

Hereinafter, an auto-redialing method in the portable telephone thus configured will be described.

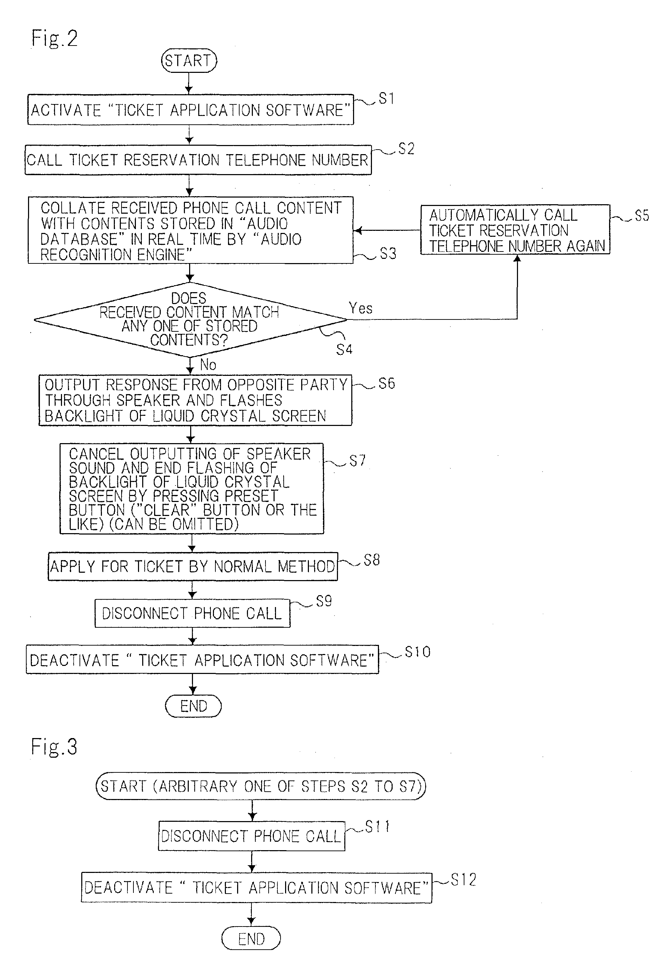

Fig. 2 is an explanatory flowchart showing a redialing operation carried out for applying for a ticket by using the portable telephone shown in Fig. 1.

First, the user applying for a ticket by using the portable telephone shown in Fig. 1 activates ticket application software 30 installed beforehand in the portable telephone (step S1).

Then, the user calls a ticket reservation telephone number. The calling is carried out by inputting the ticket reservation telephone number into operation unit 12 as in the case of making a normal phone call (step S2).

Then, a response comes from an opposite party, and audio recognition engine 20 determines whether the content of the response matches that stored beforehand in audio database 40 in real time (steps S3 and S4). Specifically, in audio database 40, as described above, there has been stored a voice tone such as a busy tone received as a busy sound when nonconnection of a phone call necessitates calling-back, or a message such as "Very busy now, please call back later". Thus, audio recognition engine 20 collates the content of the response from the opposite party with the voice tone or the message stored in audio database 40 to determine whether the content matches the voice tone or the message.

When as a result of the collation, audio recognition engine 20 determines that the content of the response from the opposite party matches one item of the content stored in audio database 40, ticket application software 30 automatically calls the previously called ticket reservation number again to carry out redialing (step S5), and the processing returns to step S3.

On the other hand, when as a result of the collation in step S4, audio recognition engine 20 determines that the content of the response from the opposite party does not match any one item of content stored in audio database 40, it means that the phone call has been connected. Accordingly, the response from the opposite party is automatically output from speaker 14, vibration is generated by vibration generation unit 15, or the backlight of display unit 13 is flashed (step S6). The output of the response through speaker 14, the vibration generated by vibration generation unit 15, or the flashing of the backlight of display unit 13 enables the user to recognize the connection of the phone call by hearing, touching, or viewing.

The user muffles the sound output through speaker 14, stops the vibration, or ends the flashing of the backlight of display unit 13 by pressing a button preset to muffle the sound output through speaker 14, stop the vibration, or end the flashing of the backlight of display unit 13 (step S7). As this operation, for example, the "clear" button of operation unit 12 can be pressed. In the case of the fixed telephone, a "function button" can be pressed. The processing of step S7 can be omitted.

Then, the user applies for a ticket using the same method that is normally used (step S8). As regards methods for applying for a ticket, for example, the user can speak directly speak to an operator, or can apply for a ticket by following recorded guidance. When the processing of step S7 is omitted, the processing of step S8 is carried out while the sound from speaker 14 is kept output (in speakerphone state), or the backlight of display unit 13 is flashed.

After the user has finished applying to buy a ticket, the user disconnects the phone call by the same method as that for normal disconnection (step S9) to deactivate ticket application software 30 (step S 10).

Next, an operation for cancelling the redialing operation during redialing in the portable telephone shown in Fig. 1 will be described.

Fig. 3 is an explanatory flowchart showing the operation of canceling redialing in the portable telephone shown in Fig. 1 in an arbitrary one of steps S2 to S7 shown in Fig. 2.

To cancel redialing in the portable telephone shown in Fig. 1 in an arbitrary one of steps S2 to S7 shown in Fig. 2, the user disconnects the phone call by pressing, as the operation of canceling the redialing in the arbitrary step, the "cancel" button of operation unit 12 (step S11). Then, ticket application software 30 cancels redialing.

Then, the user deactivates ticket application software 30 (step S12).

The method implemented in the portable telephone according to the present invention can be applied to a program executed by a computer. The program can be stored in a storage medium, or provided to the outside via a network.

The embodiment has been described by using the example of auto-redialing processing carried out for ticket application. However, the auto-redialing method according to the present invention can be used for making inquires to a help desk for various products such as electric devices, personal computers (hardware and software), and financial products.

The embodiment has been described by using the example of a portable telephone. However, the telephone of the present invention is not limited to a portable telephone. The telephone can be a fixed telephone or a PHS.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application claims priority from Japanese Patent Application No. 2010-147468 filed June 29, 2010, which is hereby incorporated by reference herein in its entirety.

## Claims

1. A telephone having a redialing function, comprising:
an audio database for storing a tone or a message received when a phone call is not connected;
an audio recognition unit that determines whether a tone or a message received, when making a phone call, matches the tone or the message stored in the audio database; and
a redialing unit that carries out redialing when it is determined by the audio recognition unit that the received tone or message matches that stored in the audio database.

2. The telephone according to claim 1, wherein the redialing unit cancels the redialing when an operation for canceling the redialing is carried out.

3. The telephone according to claim 1, further comprising an output unit that outputs, when the phone call is connected by the redialing carried out at the redialing unit, a message to that effect.

4. The telephone according to claim 3, wherein the output unit outputs a message, by voice, vibration or display indicating that the phone call has been connected.

5. An auto-redialing method in a telephone having a redialing function, comprising:
storing a tone or a message received, when a phone call is not connected, in an audio database;
determining whether a tone or a message received when making a phone call matches the tone or the message stored in the audio database; and
carrying out redialing when it is determined that the received tone or message matches the tone or message that is stored in the audio database.

6. A program for causing a telephone having a redialing function to execute:
a procedure of determining whether a tone or a message received, when making a phone call, matches a tone or a message stored as a tone or a message received when a phone call is not connected in an audio database; and
a procedure of carrying out redialing when it is determined that the received tone or message matches the tone or message that is stored in the audio database.
